# EUROPEAN PATENT APPLICATION

(11) **EP 1 004 989 A1**
(43) Date of publication of application: **31.05.2000**
(21) Application number: 98402980.1
(22) Date of filing: 27.11.1998
(51) Int. Cl.: G06T 17/00

(54) **Method and system for modeling virtual scenes in a database**

(71) Applicant: FRANCE TELECOM, 75015 Paris (FR); TELEDIFFUSION DE FRANCE, 75015 Paris (FR)
(72) Inventor: Walczak, Krzysztof, 60-645 Poznan (PL); Cellary, Wojciech, 60-179 Poznan (PL)
(74) Representative: Keib, Gérard

(57) **Abstract**

The invention pertains to the generation of virtual worlds reality and relates more specifically to a method and system for generating dynamically virtual scenes which are intended to be displayed on at least one display device, said system comprising at least one browser connected to at least one delivery server.

According to the invention, the method comprises at least steps for:
- generating a data structure representing a model of a virtual world;
- creating data representing virtual world model;
- storing said data in a database (8);
- selecting spatial and logical parts of said data for dynamically generating the virtual scenes.

## Description

The invention pertains to generation of virtual worlds and relates more specifically to a method and a system for dynamically generating virtual scenes, which are intended to be displayed on at least one display device, said system comprising at least one browser connected to at least one delivery server.

The term "scene" is used to represent the time an space arrangement of graphical objects, video, and bi-or three-dimensional images.

Systems and methods for generating and describing virtual reality are already known and are generally based on the use of standard VRML (Virtual Reality Modeling Language International Standard) browsers. These systems and these methods do not provide any means of database connectivity. An extension that defines two distinct mechanisms has been recently proposed by the VRML Consortium Enterprise Technology WG. Two distinct mechanisms are proposed: SQL Scripting, and Server Redirect. Both of the mechanisms are described in more detail in the Virtual Reality Modeling Language, International Standard ISO/IEC 14772-1:1997, http://www.vrml.org/Specifications/VRML97/index.html and in Recommended Practices for SQL Database Access http://www.vrml.org/WorkingGroups/dbwork/dbspec.html.

A drawback of standard VRML systems, is that the data used for the description of virtual reality are stored in an ASCII form in flat system files. Since the descriptions are static, once created VRML virtual worlds may be displayed to the user only in exactly the same, once prepared form. Moreover, storing VRML virtual worlds in their final form has several serious disadvantages:
- There is no possibility to select data representing parts of the virtual world that should be visualised, according to a given selection criterion. A user cannot specify what parts, geometrical or logical, of the virtual world should be displayed. As the result, the whole data of the virtual world description has to be sent to the client's browser at once.
- There is no possibility to change virtual reality appearance by changing some of its creation parameters. The creation of the description is performed once, and since the user cannot modify this process, he has no influence on the final form of the virtual reality.
   - There is no possibility to automatically update the virtual reality data. Data used for creation of the description are up-to-date when the virtual world is generated; at the time a user accesses these data, it may be no longer valid. Such virtual world model cannot be used for on-line data visualisation.

Another drawback of prior art is that since the process of editing a virtual world is based only on its geometry, it may be inefficient and time consuming. Security model is simplistic. Since the data is stored in flat files, the smallest unit of access control is a file. Furthermore, results of user interaction cannot be stored in a persistent way. All changes made by a user while interacting with a virtual world are lost when the particular instance of the virtual world is destroyed, i.e., every time a user exits from the virtual world.

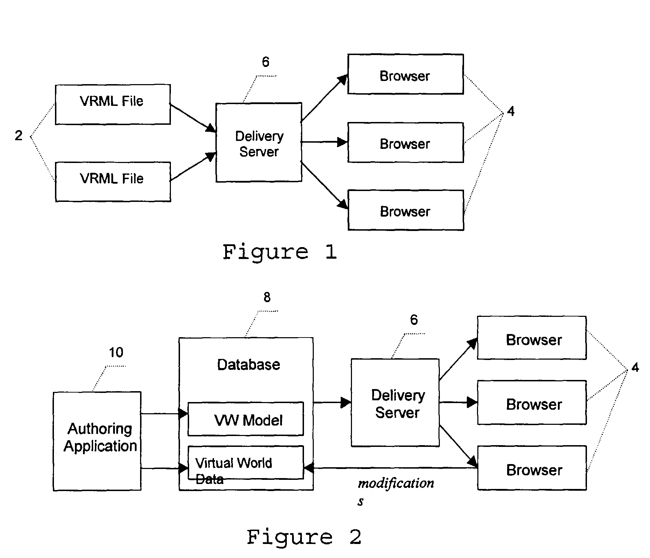

In Figure 1, the architecture of a conventional virtual reality system is presented in which descriptions of virtual scenes are stored in system files 2. One file 2 can correspond to one virtual scene. Virtual scenes can be nested, one virtual scene can use other virtual scenes. In VRML systems, virtual scenes can be connected by the use of anchors. The data flow in the system is one-directional. The browsers 4 request data from the server 6 which reads appropriate files and sends them to the requesting browser 4. With this system, users cannot choose the parts of virtual worlds they would like to be visualised, instead the whole description files are send to the clients. It is not possible to grant or revoke access privileges to different parts of virtual world. The unit of access control can be only the whole file. There is also no method of customising the virtual world appearance. The files contain the final form of the virtual scenes and neither the server 6 nor the client can modify the form of its presentation. There is no way to provide support for persistency in such virtual worlds. Changes made to the virtual world instances in the browsers are volatile since they cannot be saved.

The database connectivity mechanism proposed by the Enterprise Technology WG has a number of serious limitations. The proposal consists of two main parts, SQL Scripting mechanism, and Server Redirect. The SQL Scripting mechanism allows retrieval and update of basic data types from and to the database during the virtual world lifetime. It provides a basic database connectivity platform that can be used to retrieve and update data in a database. It is, however, implemented on a very low level.

The Server Redirect node allows restoring a state of a virtual scene during the process of the scene loading. The process of restoring the scene state is accomplished by replacing some of the field values with values retrieved from a database by SQL queries by the use of a special node (Server Redirect). The Server Redirect node requires pre-processing of the virtual world code with a parser, that finds all Server Redirect nodes, executes the specified queries in a database, and fills the VRML code with some contents retrieved from the database. The pre-processing requires that the delivery is made by a server that understands the Server Redirect syntax.

The Server Redirect mechanism, on one hand requires pre-processing and thus special server software, which makes it a non-portable solution. On the other hand, the possibilities that result from the pre-processing of the virtual world description are not fully explored. The mechanism is in fact very limited, allowing only to set-up values of some fields in VRML nodes. Access to fields that are not directly supported by the Server Redirect node, e.g. SFVec2f, is very difficult. It requires use of special conversion scripts.

Very serious limitation of the solution is the fact that only values of fields of existing nodes can be retrieved from the database. It means that elements like nodes, prototypes, routes, and fields (not field values), cannot be retrieved form the database.

A solution to the above mentioned problems is provided by a method for generating dynamically virtual scenes comprising at least steps for:
- generating a data structure representing a model of virtual world;
- creating data representing virtual world model;
- storing said data in a database;
- selecting spatial and logical parts of said data for dynamically generating the virtual scenes.

According to an important aspect of the invention, the spatial and logical parts of the virtual scenes which are selected may be used for dynamically generating alternate representations for the same virtual reality model by changing at least part of said virtual reality creation parameters. Moreover, the invented method provides possibility to constraint user access to selected virtual object model.

This method is implemented by a system comprising at least one browser connected to at least one delivery server and characterised in that, it comprises a database for storing data representing scenes of a virtual world model emanating from an authoring application module.

Preferably, said virtual world model comprises two main parts, a first part consisting of a virtual world schema, said first part that defines the virtual world structure is composed of virtual world model classes, and a second part that defines the virtual world data is composed of virtual world model objects. Both of the said virtual world model classes and virtual world model objects are preferably implemented as regular objects in a database.

This invention makes the process of development of virtual reality systems more efficient and powerful by:
- clear distinction between virtual world structure and virtual world data, which separates the process of programming from the process of design;
- enabling definition of classes thus reuse of code;
- enabling use of specially designed class factories that simplify the process of defining classes;
- enabling use of high level constructs simplifying the process of virtual world design (e.g. scenarios);
- enabling selection of the virtual world contents;
- enabling storage of multiple versions of virtual world data, and thus enabling multiple users to interact with the virtual world;
- enabling multi-version visualisation of the virtual scenes and worlds.

A better understanding of the invention will be obtained by reference to the detailed description below, in conjunction with the following drawings in which:
- Figure 1 represents the architecture of a conventional virtual reality system.
- Figure 2 illustrates a structure of a dynamic database-based virtual world system according to the invention;
- Figure 3 illustrates a simplified schematic database structure according to the invention;
- Figure 4 illustrates the process of the creation of VRML-objects according to the invention;
- Figure 5 illustrates a sample of class hierarchy according to the invention;
- Figure 6 illustrates a possible implementation of the method according to the invention;
- Figure 7 illustrates a simplified version of database classes and relationships between them according to the invention.

For more convenience, the virtual world model will be indicated in the following description by the term VR-Model.

A system for dynamic generation of virtual scenes is presented in Figure 2. This system comprises three browsers 4 connected to a delivery server 6 and a database 8 for storing data representing scenes of a virtual world model generated by an authoring application module 10.

The connection to the server 6 can be set up through some kind of conversion software, e.g., CGI, servlets, etc. Every time a user wants to access data representing a virtual scene or a selected part of it, a request is sent to the server 6. The server 6 reads data from the database 8 and creates "on-the-fly" a description of the virtual scene. The user can use such a world in exactly the same way he would use a "standard" virtual world stored in a file.

With such system, during the process of virtual scene creation, multiple factors may be taken into consideration and influent its final form. These factors include selection criteria, user preferences provided by the user or taken from the database 8, user privileges, creation method, up-to-date data read from the database 8, etc. In addition, such model enables implementation of persistency in the virtual worlds. Browsers 4 may send backward information, which can update the virtual world data in the database. Such updated virtual world data can reflect the new, modified state of the virtual world. The state modification can be a result of user interaction or simulation on the client side.

According to an important aspect of the invention, the database 8 contains a virtual world model and virtual world data. These two elements are used by the server 6 to create the final virtual world descriptions. It can describe the whole virtual scene, a logical or spatial part of a virtual scene, a version of a virtual scene, etc. The virtual world data can be also visualised in different ways by the use of different versions of the virtual world model.

The "on-the-fly" generated virtual world description is delivered by the delivery server 6 to browsers 4 which may differ. Some of them may use VRML while the other MPEG-4 as the scene description language. Some of them may allow sending backward information to the database while the other may not support such feature.

The browsers 4 that are capable of sending backward information may be used for modifications of the virtual world data. This function may be used to edit some data in the database 8 or just to store the final state of the virtual scene for use the next time, the user enters the scene. For multiple users, multiple virtual worlds (sets of virtual world data) may be created, while the virtual world model remains the same.

The authoring application module 10 is used to create the virtual worlds in the database 8. This application should be as well capable of creation the virtual world model as virtual world data.

The method according to the invention provides a mechanism of database modelling of virtual reality. This method allows for:
- generating a data structure representing a model of virtual world;
- creating data representing virtual world model;
- storing said data in a database (8);
- selecting spatial and logical parts of said data for dynamically generating the virtual scenes.

An important characteristics of the invention is that during the step of creating data representing the virtual world model two types of data describing the virtual world are being created: those representing virtual world model structure, and those representing virtual world model data.

For more convenience, in the following description, the first part will be designated by the term VR-Schema and the second part by the term VR-Data.

VR-Schema defines the virtual world structure. It consists of classes of objects indicated by the term VR-Classes, that are part of the VR-Model. VR-Data consists of VR-Objects which are database models of modelling language objects such as VRML or MPEG 4 for example. Modelling language objects are designated by the term Coded-Object. When the modelling language is VRML, a Coded-Object is a set of VRML nodes representing a semantic entity.

The structure of VR-Object is described by its class indicated by the term VR-Class. A VR-Object is a persistent record in the database 8 containing a set of attribute values, e.g., position, size, and colour. VR-Class is also a persistent record in the database 8 containing code that is necessary to create a Coded-Object for a given VR-Object. VR-Schema and VR-Data combined together can be used to generate the final form of a virtual world in a modelling language (e.g., VRML or MPEG-4).

The VR-Classes are instances of special database classes indicated by the term Class Factories. This solution simplifies the process of VR-Class design, makes the system extensible and allows designing specialised class factories that can generate highly complicated VRML code, e.g., to implement persistency. The VR-Model is stored in the database 8. The database schema that is used to store data constituting VR-Models is indicated by the term DB-Schema. It is designed in a vendor specific form depending on the database system used. It may be a hierarchy of classes and relationships between them in an object-oriented database system, or a set of tables in a relational database system. There can be multiple VR-Models corresponding to different virtual worlds in one database system. The DB-Schema is single; it is a constant component of the system.

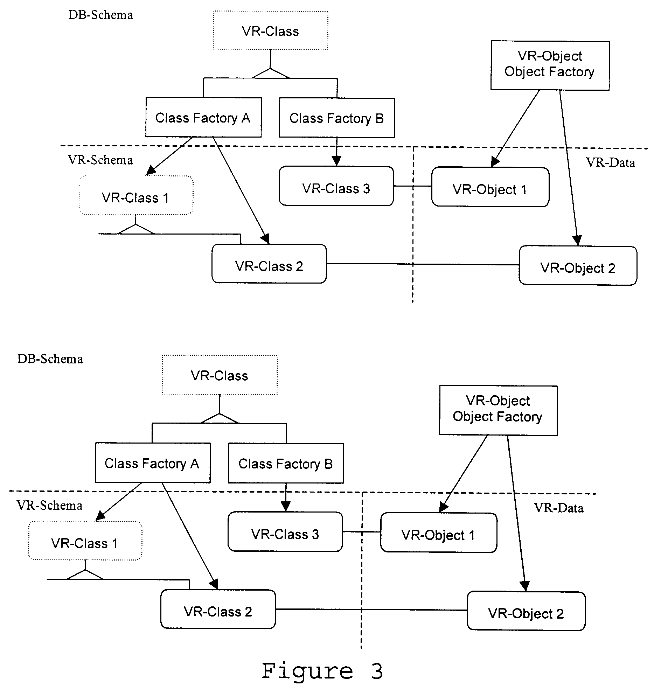

The VR-Schema consists of VR-Classes, VR-Class inheritance hierarchy, and relationships between VR-Classes. VR-Schema is stored in the database 8. The VR-Schema is dynamic as the VR-Classes are dynamic components of the system. They can be created, modified and deleted in the run-time. VR-Classes can be created and modified by users by the use of text-based or graphical authoring tools. VR-Classes cannot be created nor modified by a browser 4. In Figure 3, a simplified database structure has been presented. Upper part of the Figure 3 contains the database schema designated by the term DB-schema. In this figure the DB-Class "VR-Object" designated by the term Object Factory, an abstract DB-Class "VR-Class" that is the superclass of all Class Factories, and sample Class Factories (in this figure: A and B) are presented. The VR-Class is the root class for all Class Factories. More precisely, Class Factories are those subclasses of the "VR-Class" DB-Class that are not abstract. Two Class Factories, Class Factory A and Class Factory B are presented in Figure 3. From the database 8 point of view, VR-Classes are objects representing instances of the Class Factories that themselves are DB-Classes. From the VR-Schema point of view, however, the VR-Classes are classes used to describe the structure of VR-Objects.

There are two sample VR-Objects in Figure 3: "VR-Object 1" and "VR-Object 2". Again, from the database point of view, the VR-Objects are instances of the VR-Object (Object Factory). From the VR-Schema point of view, however, VR-Objects are instances of VR-Classes. Each VR-Object has associated one VR-Class that describes its structure.

Each Class Factory may use different method of coding VR-Classes. Some of them may use specialised class definition languages, other may use standard VRML PROTO syntax, while yet other may be highly specialised and use only a set of parameters to define a VR-Class.

As presented in Figure 3, the VR-Classes can form inheritance hierarchies. The exact implementation method and semantics of the inheritance depends on the Class Factories. Some of the Class Factories may not support inheritance.

Since there are multiple Class Factories in the DB-Schema there are also multiple roots of the VR-Class inheritance hierarchy. Therefore, the VR-Class inheritance relationship forms rather a DAG with multiple roots than a simple tree. VR-Classes produced by different Class Factories may be connected lower in the VR-Class inheritance hierarchy.

The multiple Class Factories are used to simplify the creation of complex VR-Classes in the process of authoring a VR-Model. They help also to shorten and simplify the code of complex VR-Classes.

Each VR-Class has two kinds of instances: VR-Objects, and Coded-Objects.

A VR-Object is a persistent record in the database 8; it is a part of VR-Data. It stores all attribute values that are necessary to build particular Coded-Object. One VR-Object in the database 8 corresponds to one Coded-Object in a virtual world, e.g., VRML-World or MPEG4-World. There can be, however, an arbitrary number of Coded-Objects corresponding to the same VR-Object as there can be an arbitrary number of virtual worlds created from the same VR-Model.

Since the structure of a VR-Object is defined in the VR-Class associated with it, the VR-Objects are created by the use of a special VR-Object constructor method defined in the Class Factory that was used to create the VR-Class. Classes subclassing the VR-Class must override this method to adapt it to the specific method of coding of the VR-Classes.

When the VR-Object constructor creates new instance of the VR-Object, it assigns values to the VR-Object attributes. Not all of the object attributes must be provided to create a VR-Object. A VR-Class may specify some default values for attributes that do not have value specified in a VR-Object. Only values of these attributes that are defined in the object are stored in the VR-Object database record. The remaining, not specified values are taken directly from the VR-Class.

The VR-Objects are created during the virtual world design process, manually or by the use of some authoring tool. They can be also read from an input file.

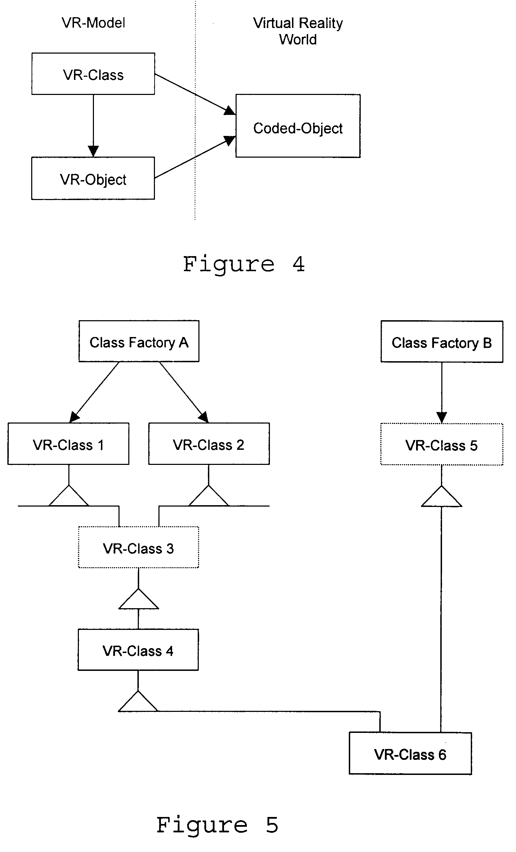

Figure 4 illustrates the creation of a Coded-Object, VR-Object which stores the attribute values of the particular Coded-Object that is being created, and VR-Class which stores the structural information for the class of objects the created Coded-Object belongs to.

Since multiple virtual worlds can be created from one VR-Model, there can be multiple Coded-Objects corresponding to one VR-Object. At the time of creation, all of the Coded-Objects created at a given time from a given VR-Object are identical. Since each virtual world may evolve separately, the Coded-Objects can be modified differently in different virtual worlds assuming that the virtual world is interactive or simulated and that the virtual object is dynamic.

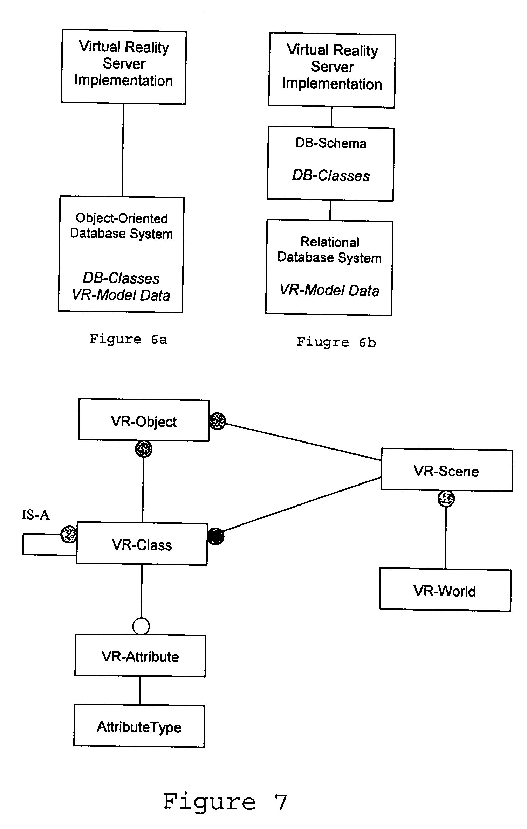

In Figure 5, a sample VR-Schema is presented in which two Class Factories are used: Class Factory A and Class Factory B. We assume that the "Class Factory A" enables definition of classes in some specific language, and that the "Class Factory B" is an array Class Factory that is used to create VR-Classes representing arrays of repeating elements.

The Class Factories are used to construct a DAG of VR-Classes. Two VR-Classes: "VR-Class 1" and "VR-Class 2", are defined by the use of "Class Factory A". Each of them has an interface part containing some VR-Attributes and an implementation part containing the actual code used to generate the Coded-Objects. The "VR-Class 3" inherits from these two VR-Classes. This VR-Class is also constructed by the "Class Factory A". The "VR-Class 3" combines the implementations of its two superclasses. This VR-Class adds also some of its own geometry. Said "VR-Class 3" is an abstract VR-Class and cannot have instances. It uses a component that is not defined in this VR-Class. The "VR-Class 3" uses this component in a way as if it were a well-known defined element, but does not define its structure. The "VR-Class 3" must be subclassed to have instances. The subclasses must define the component, if they are not to be abstract. The "VR-Class 3" has one subclass: "VR-Class 4". This class inherits all of the attributes and implementation from its superclass" "VR-Class 3". The only element that is added in this class implementation is definition of the component that was not defined in the "VR-Class 3". Since all of its superclass components are defined, the "VR-Class 4" is not abstract and can have instances: VR-Objects.

The "Class Factory B" is a sample Class Factory that can be used for efficient generation of classes that have a form of one, two, or three-dimensional arrays of arbitrary size, composed of identical components.

In the sample schema, this Class Factory has been used to create one VR-Class: "VR-Class 5". This is an abstract VR-Class of 100 elements of the same type, equally distributed in a square flat array. This class must inherit from a class to be able to have instances. The geometry of the superclass is used to create the repeating elements.
In the schema, the "VR-Class 5" has been used to create another VR-Class: "VR-Class 6". The "VR-Class 6" inherits from two superclasses: "VR-Class 5" and "VR-Class 4". The first one is used to construct the complex geometry, the second one is used as the definition of the repeating element. The "VR-Class 6" inherits all of the attributes of the VR-Class 4. These attributes can be used to modify the way the repeating geometry element is constructed.

In Figures 6a and 6b, possible implementation strategies of the system are presented. One of them shown in 6a, uses an object-oriented database system, while the other shown in 6b, a relational database system. In an object-oriented database system the DB-Schema is implemented directly on the level of database schema. In case of the relational database, the database schema is designed in form of relations to store the appropriate VR-Model data while the DB-Schema is implemented in an additional software layer on top of the database system.

The DB-Schema consists of DB-Classes, DB-Class inheritance hierarchy and relationships between DB-Classes.

In Figure 7, a simplified version of the DB-Schema is presented in which the some of the DB-Classes and relationships between them are presented. The main DB-Classes in the DB-Schema are: "VR-Class", "VR-Object", "VR-Scene", and "VR-World".
The "VR-Class" is an abstract DB-Class that is a superclass of all Class Factories. All VR-Classes are instances of one of its subclasses. The "VR-Class" itself is abstract, it cannot be directly instantiated since it does not provide mechanisms that could be used to construct VR-Classes. The subclasses of the "VR-Class" that are Class Factories must define such mechanisms.

The "VR-Object" (Object Factory) is a DB-Class that is used to construct all VR-Objects. From the database schema point of view all VR-Objects are instances of DB-Class "VR-Object", although from the VR-Schema point of view they are instances of different VR-Classes. The DB-Class "VR-Object" does not have to be subclassed.

The "VR-Scene" is a DB-Class whose instances are database models of virtual scenes. VR-World is a DB-Class whose instances are database models of virtual worlds.

The "VR-Class" is the superclass of all Class Factories and gathers properties common to all Class Factories. In one particular embodiment of the method related to the invention it has the following structure of attributes:

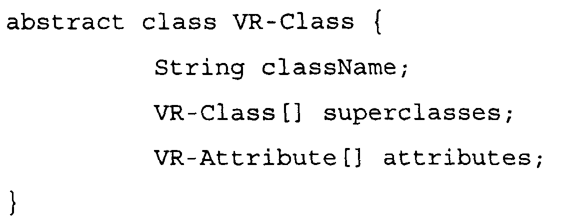

The "className" is a string of characters identifying the VR-Class.

The "superclasses" attribute is a list of references to the VR-Classes that are parents of this VR-Class in the inheritance hierarchy. The list may be empty if the VR-Class does not inherit from other VR-Classes, can contain one VR-Class reference if it inherits from one superclass, or a list of references to VR-Class instances if the class inherits from more than one superclass.

"Attributes" is a set of references to objects of class VR-Attribute. Each of these objects determines name and type of one of the VR-Class attributes. Each VR-Attribute stores also the default value, which is characteristic for the particular VR-Class. VR-Attributes can be shared by VR-Classes that are in parent-child relationship in the inheritance hierarchy. They cannot be, however, shared by other VR-Classes even if they have the same name, are of the same type, and have the same default value. In one particular embodiment of the method related to the invention the VR-Attribute DB-class has the following structure:

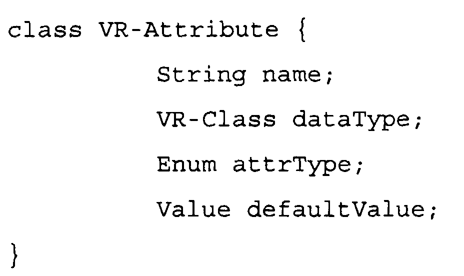

The "name" identifies the VR-Attribute in the set of all VR-Class attributes. This name must be unique among all attributes within one VR-Class. VR-Attributes from different VR-Classes may have the same name.

The "dataType" is a class reference identifying the VR-Class of the VR-Attribute. The "dataType" is a reference to a VR-Class. We assume that there is a set of predefined VR-Classes in the system, corresponding to basic node and field types of the modelling language used. Whenever possible, the types of the VR-Attribute associations are checked during the design time and during virtual world generation.

The "attrType" is an attribute specifying the character of this VR-Attribute. A VR-Attribute can be a field, exposedField, eventIn, or evetOut. In case of VRML modelling language, the "attrType" value can be used to partially verify correctness of ROUTE statements.

The "defaultValue" is the default value of the attribute. The value is used when an object of the VR-Class does not specify value for the given VR-Attribute.

The DB-Class "VR-Class" provides basic functionality that enables operations on VR-Classes and VR-Objects that are instances of VR-Classes. In one particular embodiment of the method related to the invention these operations include:
- creation of a new VR-Class,
- deletion of a VR-Class,
- adding a VR-Attribute to VR-Class,
- removal of a VR-Attribute from a VR-Class,
- modification of the VR-Class structure,
- creation of a new VR-Object being an instance of the VR-Class,
- deletion of a VR-Object of the given VR-Class,
- modification of the VR-Object attribute values, and
- generation of modelling language description of a given VR-Object.

The DB-Class "VR-Class" provides abstract definitions of the above-listed methods. This DB-Class may be subclassed to produce real Class Factories.

From the logical point of view, all VR-Objects are instances of VR-Classes, which in turn are instances of Class Factories. From the implementation point of view, however, the VR-Objects are instances of DB-Class "VR-Object" (Object Factory). The DB-Class "VR-Object" can be final since it does not have to be subclassed. VR-Objects can be created in run-time.
In one particular embodiment of the method related to the invention, the structure of the DB-Class: VR-Object is the following: 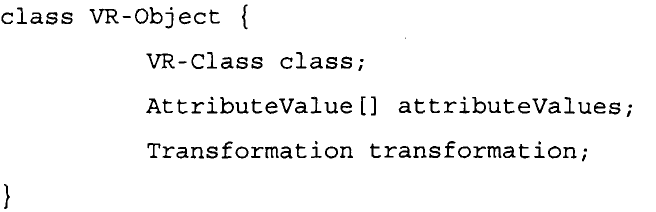 while the structure of the "AttributeValue" DB-Class is the following: 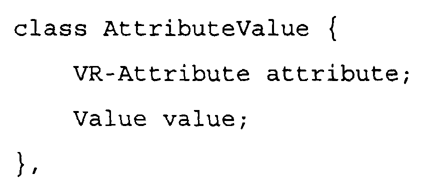 and the structure of the "Transformation" and "Value" DB-Classes can be outlined as: 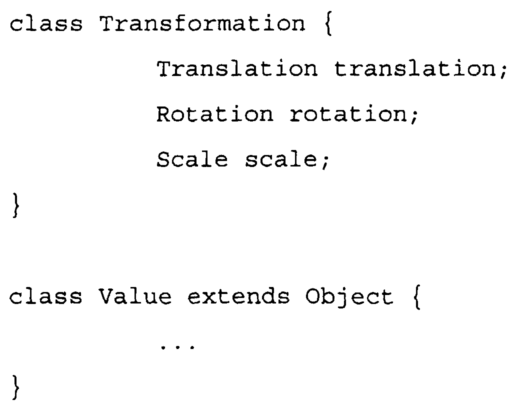 Each VR-Object defines:
- an ID - identifier of the VR-Object (usually provided automatically by the database system),
- VR-Class reference that associates the VR-Object with its VR-Class
- set of attribute-value pairs that define the values of the VR-Object attributes
- spatial transformation (translation, rotation, and scale) that is used to position the object in the virtual world space

## Claims

1. Method for generating dynamically virtual scenes which are intended to be displayed on at least one display device, said method characterised in that it comprises at least steps for:
- generating a data structure representing a model of a virtual world;
- creating data representing virtual world model;
- storing said data in a database (8);
- selecting spatial and logical parts of said data for dynamically generating the virtual scenes.

2. Method according to claim 1, characterised in that the spatial and logical parts of the virtual scenes which are selected may be used for dynamically generating alternate representations for the same virtual reality model by changing at least part of said virtual reality creation parameters.

3. Method according to claim 1, characterised in that it provides possibility to constraint user access to selected virtual object model.

4. Method according to claim 1, characterised in that during the step of creating data representing the virtual world model, two types of data describing the virtual world are being created, those representing virtual world model structure, and those representing virtual world model data.

5. Method according to claims 1 to 4, characterised in that the virtual world model comprises two main parts, a first part consisting of a virtual world schema, said first part that defines the virtual world structure is composed of virtual world model classes, and a second part that defines the virtual world data is composed of virtual world model objects, both of the said virtual world model classes and virtual world model objects are implemented as regular objects in the database (8).

6. Method according to claim 4, characterised in that the virtual world model classes are instances of special database classes said classes are Class Factories which may use different method of coding the virtual world model classes.

7. Method according to claim 4, characterised in that the coded object is created by the use of virtual world model objects which are persistent records in the database (8) containing sets of attributes, the structure of each said virtual world model object being described by one of the virtual world model classes and in that the virtual world model classes consist of persistent records in the database (8) containing code that is necessary to create a coded object for a given virtual world model object.

8. Method according to claims 1 to 7, characterised in that the generated virtual world description is delivered by the delivery server (6) to at least one browser (4) which allow sending backward information to the database (8) for modifying the virtual world data.

9. Method according to claim 5, characterised in that the virtual world model classes have the following structure:

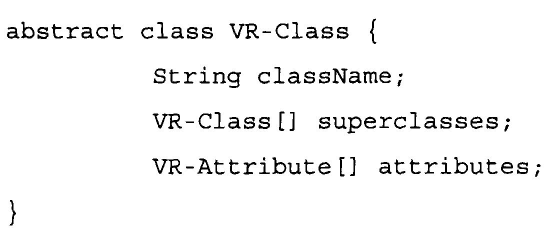

10. Method according to claim 9 , characterised in that the 'VR-Attribute' have the following structure:

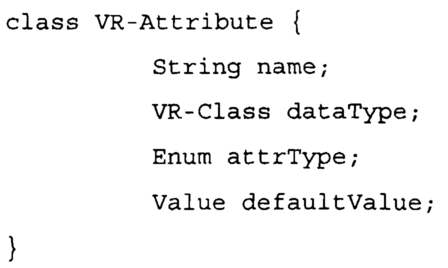

11. Method according to claim 5, characterised in that the virtual world model objects can be created in the run-time and have the following structure:

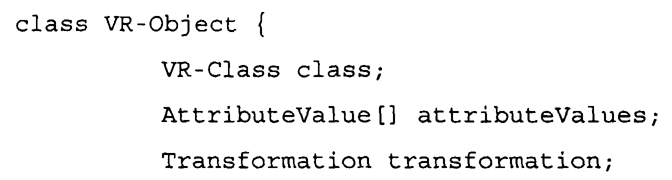

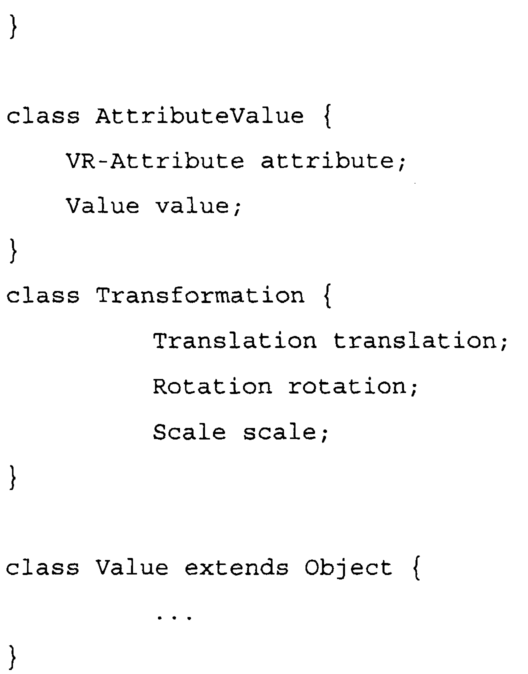

12. Method according to claim 11, characterised in that each virtual world model object defines a virtual class reference, a set of pairs: attribute-value, a spatial transformation such as translation, rotation, and scale.

13. System for generating dynamically virtual scenes which are intended to be displayed on at least one display device said system comprising at least a browser (4) connected to at least a delivery server (6), characterised in that it comprises at least a database (8) for storing data representing scenes of a virtual world model emanating from an authoring application module (10).

14. System according to claim 13, characterised in that said database (8) is an object-oriented database system.

15. System according to claim 13, characterised in that said database (8) is a relational database system.

16. System according to of the claims 13 to 15, characterised in that said virtual world model comprises two main parts, a first part consisting of a virtual world schema, said first part that defines the virtual world structure is composed of virtual classes, and a second part that defines the virtual world data is composed of coded objects. Both of the said classes and objects are implemented as regular objects in the database (8).
